(19) Europäisches Patentamt
European Patent Office
Office européen des brevets

(11) **EP 4 039 514 B1**

(12) **EUROPEAN PATENT SPECIFICATION**

(45) Date of publication and mention
of the grant of the patent:
**26.06.2024 Bulletin 2024/26**

(21) Application number: **22163135.1**

(22) Date of filing: **20.09.2018**

(51) International Patent Classification (IPC):
**B60H 1/00** *(2006.01)*    **B60H 1/32** *(2006.01)*

(52) Cooperative Patent Classification (CPC):
**B60H 1/00428; B60H 1/3222; B60H 1/3232;**
B60H 2001/3273

(54) **TRANSPORT CONDITIONING SYSTEM WITH ELECTRIC POWER DISTRIBUTION ASSEMBLY**

TRANSPORTKONDITIONIERUNGSSYSTEM MIT STROMVERTEILUNGSBAUGRUPPE

SYSTÈME DE CONDITIONNEMENT DE TRANSPORT AVEC UN ENSEMBLE DE DISTRIBUTION D'ÉNERGIE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.08.2022 Bulletin 2022/32**

(62) Document number(s) of the earlier application(s) in accordance with Art. 76 EPC:
**18195821.6 / 3 626 488**

(73) Proprietor: **Zanotti S.p.A.**
**46020 Pegognaga (IT)**

(72) Inventors:
• **SFRAGARA, Massimiliano**
**I-46020 PEGOGNAGA (IT)**
• **VENTURINI, Luca**
**I-46020 PEGOGNAGA (IT)**
• **GUALTIERI, Stefano**
**I-46020 PEGOGNAGA (IT)**

(74) Representative: **Porta & Consulenti Associati S.p.A.**
**Via Vittoria Colonna, 4**
**20149 Milano (IT)**

(56) References cited:
**WO-A1-2017/176682    WO-A1-2018/009798**
**WO-A2-2017/218910    WO-A2-2018/136738**
**US-A1- 2015 246 593    US-B1- 9 440 525**

## Description

### Technical field

The present invention relates to a transport conditioning system including a conditioning unit for controlling the temperature within an inner space of a cargo storage compartment mounted on a transport vehicle. In particular, the present invention concerns a transport conditioning system comprising a power distribution assembly for powering the electrical loads of the conditioning unit.

### Background art

Transport vehicles such as trucks, vans and (semi-)trailers can be used for carrying cargo that need to be maintained at a controlled temperature, in particular perishable items such as fresh or frozen food or cut flowers, in order to avoid deterioration during transportation. Such vehicles comprise a thermally isolated storage compartment that is maintained at a predetermined temperature different (lower or higher) than the external ambient conditions by a transport conditioning system mounted on the vehicle and operatively associated with the inner space of the storage compartment. Even though the temperature-controlled storage compartment can be set or maintained at a temperature higher than the external ambient temperature, for example in cold climates, these vehicles are generally referred to as refrigerated transport vehicles.

Typically, transport conditioning systems comprise a conditioning unit comprising a compressor, an air-cooled condenser, one or more fans, a filter-drier or evaporator and a plurality of connecting conduits to form a closed loop refrigerant circuit. In the compressor, a refrigerant gas is compressed to a higher temperature and pressure. The compressed gas then moves to the air-cooled condenser where air flowing across condenser coil fins cools the gas flowing in tubes. By removing latent heat, the gas condenses to a high pressure/low temperature liquid, which then flows toward an expansion valve and an evaporator positioned at the storage compartment. Upstream the expansion valve, a filter-drier may be placed in the refrigerant circuit for keeping the refrigerant clean and dry. As the condensed liquid passes through the expansion valve, some of it vaporizes into a gas and flows in the evaporator. Air from the cargo box flows over the evaporator and the remaining condensed liquid absorbs heat from the flowing air and is vaporized. Evaporator fans energize the air flowing over the evaporator and introduce the conditioned air into the inner space of the storage compartment.

Diesel engines used as prime movers on transport refrigeration systems may have two operating speeds, that is a high speed, such as 2200 rpm, and a low speed, such as 1400 rpm. In operation, the diesel engine is operated at high speed during temperature pulldown and at low speed during the temperature maintenance mode. During standstill, the diesel engine is typically idling at low speed. The diesel engine is generally designed to meet the power needs during operation at maximum capacity with efficient fuel consumption. Therefore, during the temperature maintenance mode and standstill mode, the diesel engine is operating at lower efficiency and with increased fuel consumption. US 2014/0026599 describes a method for operating a refrigeration system having a refrigeration unit for providing temperature conditioned air to a temperature controlled space, an engine and an electric generation device, the method comprising: providing a battery system having a least one battery unit supplying electric power; during a high cooling demand mode, operating the engine to drive the electric generation device for supplying electric power and simultaneously employing the battery system for supplying electric power to jointly power the plurality of power demand loads of the refrigerant unit. The document states that in this way the engine can be used less, thereby saving fuel and reducing emissions.

Transport refrigeration units generally employ an internal combustion engine and a generator to produce electrical power, typically AC power, to drive the compressor and fans. Existing sources of AC power produce unregulated AC power that can vary in voltage and frequency. US 2016/0311294 remarks that, when the need arises to power auxiliary devices, the AC power from the generator often cannot be used due to its unregulated nature. The patent publication concerns a transport refrigeration unit including a source of unregulated AC power; a compressor; a power conditioning module to convert the unregulated AC power to regulated power; and a switch having a first position to connect the source of unregulated AC power to the compressor and a second position to connect the source of unregulated AC power to the power conditioning module. A power conditioning module can be an AC/DC converter connected to one or more DC power connections, to which an operator can connect a DC load, such as soft drinks pumps or lift gate.

EP 1046543 A2 discloses a transport refrigeration unit comprising a structural support framework configured to be attached to the front wall of the transport trailer, and the following components, all supported by the framework: a compressor having an electric drive motor for running the compressor; a condenser heat exchanger unit operatively coupled to said compressor discharge port; an evaporator heat exchanger unit operatively coupled to said compressor; at least one fan assembly having fan motors; and an integrally mounted unitary engine driven generator assembly configured to selectively produce at least one AC voltage at one or more frequencies, wherein said generator assembly is configured to produce sufficient electric power to operate said compressor drive motor and the fan motors. In the described embodiments, the generator is a permanent magnet synchronous generator configured to have an output frequency of 65 Hz at an engine speed of 1950 rpm. and an output frequency of 45 Hz at an engine speed of 1350 rpm. All of the evaporator and condenser fan motors and compressor drive motor are selected such that they operate at the synchronous generator output frequencies and voltages.

WO 2018/009798 A1 describes a hybrid transport refrigeration unit comprising: a high voltage battery including a plurality of cells; at least one high voltage component electrically connected to the plurality of cells; a generator configured to provide electric power to at least one of the at least one high voltage component; a combustion engine constructed and arranged to drive the generator; and a low voltage starter electrically connected to at least one of the plurality of cells, and constructed and arranged to start the combustion engine.

WO 2018/136738 A2 discloses a DC architecture of a transport refrigeration unit. The DC architecture includes a communications bus, a DC power bus, first and second voltage control units respectively comprising a DC/DC converter coupled to the DC power bus and a local controller coupled to the communications bus and to the DC/DC converter, an energy storage unit and a DC powered load. The energy storage unit includes a battery bank and the DC powered load includes a DC compressor.

US 2015/0246593 A1 relates to an electrical controller device for powering a transport vehicle based load. The electrical controller comprises a propulsion vehicle source driven by a diesel engine, a passive vehicle source disposed on the vehicle and adapted for providing power independently of vehicle motion or engine state; a vehicle based load responsive to power from the propulsion vehicle source or the passive vehicle source; an interface to a native vehicle load, the interface for powering the native vehicle load concurrently with the vehicle based load; and a storage element (i.e. battery) configured for accumulating excess power for subsequent dispersal to the vehicle based load.

WO 2017/176682 A1 describes a power management system for a transport refrigeration unit. The transport refrigeration unit includes a generator; a compressor; one or batteries configured to at least in-part provide electric power to the compressor motor; and a power management system including a battery temperature sensor, a battery current sensor, a compressor motor current sensor and computer-based controller configured to receive and process respective signals from the sensors for generating diagnostic data. In an example, the batteries are available as a 'battery boost' to increase or supplement the DC power through the bus.

## Summary of the invention

During a daily operating cycle, a refrigerated vehicle requires a widely variable capacity depending on several factors. For example, a high power generating capacity is necessary during temperature pulldown inside the compartment, frequent door openings and in the presence of high ambient temperatures, whereas a significantly smaller capacity is requested at low ambient temperatures, with few door openings and when the temperature in the compartment is near the programmed setpoint.

In order to reduce capacity and consequently fuel consumption, a low engine speed for powering the generator may be used. According to the system described in EP 1046543, this would however result in a voltage output unsuitable for powering the electrical loads such as compressor and fans.

Recently, restrictions or even bans for diesel vehicles in city centres have been introduced to tackle air pollution and noise. Such regulations may extend to idling vehicles with running motors and impose the switching off of the diesel engines. Therefore, during standstill, for example when the cargo is unloaded from the vehicle, or while the refrigerated vehicle travels in a restricted area, it would be necessary or at least desirable to operate the refrigeration unit with the engine off.

Renewable energy sources to power the refrigeration unit, such as solar panels or wind turbines, which can be installed on the vehicle, would be advantageous as an auxiliary source for either directly powering the refrigeration unit or for storage of electric energy in batteries. However, the Applicant has noted that solar panels supply a variable DC voltage, which is generally unsuitable for powering the electrical loads.

The Applicant has recognised that provision of an AC-DC voltage converter coupled to an AC electric generator and of a high voltage DC power distribution bus electrically connected to the AC-DC voltage converter provides for a powering of the electrical loads which is largely independent of the technical specifications of the power supplies used for the loads in the transport conditioning unit.

The Applicant has also realised that a DC high-voltage source created downstream the AC electric generator and configured to distribute power to at least one of the electrical loads of the conditioning unit allows the use of other power sources in addition to or instead of the electric generator.

The present invention relates to a transport conditioning system as defined in claim 1. The transport conditioning system comprises:

- a transport conditioning unit for controlling the temperature within an inner space of a cargo storage compartment mounted on a transport vehicle, the transport conditioning unit comprising a compressor, a condenser and a condenser fan associated with the condenser for providing air flow thereover, an evaporator, an evaporator fan associated with the evaporator for providing air flow thereover, and a plurality of electricals loads comprising an electric compressor motor for driving the compressor and a first electric fan motor for driving the condenser fan,

- an electric AC generator driven by an internal combustion engine, and

- an electric power distribution assembly for powering at least one electrical load of the plurality of electrical loads, the assembly comprising

   an AC-DC voltage converter electrically coupled as input to the electric AC generator for receiving AC power and configured to convert the AC power to DC power so as to supply DC voltage as output, and

   a DC power distribution bus electrically coupled as input to the AC-DC voltage converter and configured to carry the DC voltage,

wherein the least one electric load is powered by the DC power distribution bus, said least one electric load being the compressor motor.

In a typical configuration, the compressor has a flow inlet and a flow outlet, the condenser is operatively coupled to the flow outlet of the compressor and the evaporator is operatively coupled to the flow inlet of the compressor and to a flow outlet of the condenser.

Preferably, the power distribution assembly comprises only a single DC power distribution bus electrically coupled to the AC-DC voltage converter.

The AC-DC voltage converter is designed to output a high DC voltage, preferably of from DC 400V to DC 800V, more preferably of from 500V to 700V.

Preferably, the electric AC generator is a synchronous generator designed to output a three-phase voltage to be received by the AC-DC voltage converter, the three-phase output voltage being preferably comprised between AC 280V and AC 550V.

The Applicant has observed that especially when a high-voltage power supply is provided as a DC power to the electrical loads of the conditioning unit, voltage stability is particularly desired.

Preferably, the power AC-DC converter is configured to output a substantially constant output DC voltage while accepting a relatively wide range of input AC voltage values. A suitable voltage value or average value within a controlled range of values can be selected depending on the overall load of the conditioning unit.

Preferably, the AC-DC voltage converter is a full bridge converter, more preferably a three-phase full bridge converter.

In the present description and claims and according to some preferred embodiments, with a substantially constant DC voltage is meant the converter voltage values output lies within a range of tolerance of values, which ensures, for a given specific configuration of the electrical loads and power sources, a desired voltage stability. Generally speaking, the voltage stability in the DC power distribution bus mainly depends on the balance between the power absorbed by the electrical loads and the power generated by the sources.

In a preferred embodiment, the output DC voltage is a substantially constant value of from DC 580 V to 620 V about the midpoint voltage of DC 600 V. In a preferred embodiment, the DC voltage output is of 580V resulting from the rectification a standard three-phase 400V AC voltage.

Within the present description and claims, the electrical components which need to be powered for operation, in particular those of the conditioning unit such as the compressor motor and the fan motor(s), are collectively indicated as electrical loads.

Preferably, each of the plurality of electrical loads is powered by the DC power distribution bus, the compressor motor and the first electric fan motor being electrically coupled to the power distribution bus.

Preferably, each electrical load of the plurality of electrical loads is electrically coupled in parallel to the common DC power distribution bus.

The nature of the electrical loads of the conditioning unit can vary, and may for instance comprise alternating current (AC) motors and/or comprise of DC motors operating at a different DC voltage from that running in the high-voltage distribution bus. In some embodiments, one or more electrical loads is connected to the DC power distribution bus through a voltage conversion device, in the description and claims generally indicated as load voltage conversion device, which takes the current running on high voltage in the DC distribution bus as input and generates a suitable specific output AC or DC voltage required by the relevant electrical load.

Preferably, the electric power distribution assembly comprises a first load voltage conversion device electrically coupled as input to the DC power distribution bus and delivering voltage to an electrical load of the plurality of electrical loads, said electrical load being electrically coupled to the DC power distribution bus via the first load voltage conversion device.

Preferably, the first load voltage conversion device is a DC-AC inverter electrically coupled as input to the DC power distribution bus and as output to the compressor motor and being configured to convert the DC voltage received from the DC power distribution bus into a AC voltage to be supplied to the compressor motor.

Preferably, the electric power distribution assembly comprises a second load voltage conversion device, the second load voltage conversion device being a DC-DC voltage converter electrically coupled as input to the DC power distribution bus and as output to the first fan motor, the DC-DC voltage converter configured to convert the DC voltage received from the DC power distribution bus into a different DC voltage to be supplied to the first fan motor.

Preferably, the converted DC voltage output from the DC-DC voltage converter is of from 10 V to 150 V.

Preferably, the plurality of electrical loads comprises a second electric fan motor for driving the evaporator fan, the second electric fan motor being powered by the DC power distribution bus. The second electric fan motor is electrically coupled to the DC power distribution bus.

Preferably, a load voltage conversion device is electrically coupled as input to the power distribution bus and as output to the second electric fan motor, to convert the DC voltage received from the DC power distribution bus into a different DC voltage to be supplied to the second electric fan motor.

In a preferred embodiment, the first load voltage conversion device is a multi-output DC-DC voltage comprising an input DC voltage terminal and a plurality of output DC voltage terminals, wherein the input DC voltage terminal is electrically coupled to the power distribution bus and a first output terminal of the plurality of output DC voltage terminals is electrically coupled to the first electric fan motor and a second output terminal is electrically coupled to the second fan motor.

Preferably, the load power conversion devices are connected individually to the DC distribution bus.

Preferably, the transport conditioning unit and, preferably, the transport conditioning system, is configured to be powered by shore power, for example at AC 400V 50Hz voltage, according to the "standard" used in Western Europe. The unity grid AC power can be fed into the AC-DC voltage converter to transform the input AC voltage into a high DC voltage then distributed to the electrical loads by means of the DC power distribution bus.

Preferably, the electric AC generator comprises output AC terminals and the electric AC-DC voltage converter comprises first input terminals electrically connected to the output AC terminals and second input terminals connectable to a utility power grid supplying AC voltage.

The Applicant has noted that, although the AC-DC converter is preferably designed to provide a substantially constant DC voltage output across a range of AC amplitude and frequency values, in some circumstances, for example due to an unbalance to power generated by the engine-driven generator and power requested by the loads, the pre-set midpoint voltage value may have the tendency to be unstable during operation. Preferably, an electronic automatic control of the DC voltage output from the energy chain is implemented to ensure stable operation of the power distribution system about the desired a desired mean voltage value.

Herein, it is also described a method, not being part of the present invention, for controlling the voltage output of a power distribution system for powering a plurality of electrical loads of a transport conditioning unit. In the method, the transport conditioning unit comprises an internal combustion engine, an electric AC generator driven by the internal combustion engine, a compressor, a condenser, and a condenser fan associated with the condenser for providing air flow thereover, and a plurality of electrical loads comprising an electric compressor motor for driving the compressor and a first electric fan motor for driving the condenser fan, and

a power distribution system comprising an AC-DC voltage converter electrically coupled as input to the AC generator and as a output to a DC power distribution bus configured to carry DC voltage, the DC power distribution bus being electrically coupled to at least one of the plurality of electrical loads,

the method comprising:

a) measuring an instantaneous DC voltage value, $V_{DC}(t)$, and an instantaneous direct current value, $I_{DC}(t)$, at the output of the AC-DC voltage converter;
b) computing an instantaneous DC power value, $P_{DC}(t)$, based on the measured values $I_{DC}(T)$ and $V_{DC}(t)$;
c) determining an engine horsepower value, $P_m{}^t$, of the internal combustion engine, the horsepower value, $P_m{}^t$, being associated with the instantaneous DC power value;
d) computing a nominal running speed value of the internal combustion engine corresponding to the engine horsepower value, $P_m{}^t$, based on an equation or on a lookup table describing a numerical relationship between engine horsepower values and running speed values associated with the internal combustion engine; and
e) running the engine at the nominal running speed value.

Typically, the running speed of the engine is represented by a RPM value.

Preferably, determining an engine horsepower value, $P_m{}^t$, comprises computing the $P_m{}^t$ value by converting the instantaneous value $P_{DC}(t)$ into an engine horsepower value, $P_m{}^t$, by means of a conversion factor associated with an energy conversion efficiency. In another example, determining the $P_m{}^t$ value comprises performing a read of a lookup table describing a numerical relationship between engine horsepower of the engine and electrical DC power output from the AC-DC converter.

Preferably, the method, which is not part of the present invention, further comprises repeating steps a) to e).

The Applicant has observed that being the power distribution system able to accept a relatively wide range of input AC voltages and frequencies, it would be advantageous to operate the engine at relatively low fuel consumption while satisfying the power demand of the electrical loads. The Applicant has understood that it is possible, for a given power supply to the electrical loads to select an operating point of the internal combustion engine that has a reduced or the least fuel consumption.

Preferably, the method comprises:

- storing a lookup table implementing a plurality of data tables, each data table describing a numerical relationship between engine horsepower values and running speed values at a constant value of fuel consumption, each data table being associated with a value of fuel consumption so as a respective plurality of values of fuel consumption is associated with the plurality of data tables,

wherein step e) comprises computing a respective running speed value corresponding to the engine horsepower value $P_m^t$ from each data table of the lookup table and selecting a running speed value from the data table having the lowest value of fuel consumption of the plurality of fuel consumption values, the selected running speed value being the nominal running speed value.

According to examples not being part of the present invention, the internal combustion engine is provided with an engine intake throttle and the method comprises:

- determining an instantaneous running speed value of the engine,

wherein step e) comprises, after computing a nominal running speed value:

- comparing the instantaneous running speed value with the nominal running speed value,
- if a difference between the nominal running speed value and the instantaneous running speed value larger than a pre-set running speed difference value, adjusting the throttle position to the nominal running value so as to run the engine at that speed value, and
- if the difference between the nominal running speed value and the instantaneous running speed value is zero or within the pre-set running speed difference value, taking no action so as to maintain the running speed to the nominal running speed value.

Preferably, the instantaneous running speed is determined from a measurement simultaneous to the measurements of Voc(t) and $I_{DC}$(t).

The disclosed solution allows multiple and/or different power sources having different electrical output characteristics to be connected to the electrical loads.

Such high voltage bus provides wide flexibility in the power flow. For example, in road mode, electric power can flow from the photovoltaic panels to the compressor and fan motors to harvest renewable energy. If the solar energy is not enough to power the electric loads of the conditioning unit, additional power can flow into the DC distribution bus from the generator set. On the other hand, if there is an excess of solar power, such excess quota can flow towards the batteries to recharge them.

During standstill of the vehicle, such as when the vehicle is in parking mode, power originating from the utility grid can be provided to the compressor motor and fan motors, and preferably also to electric heaters for operation of the conditioning unit and/or to recharge the batteries of the transport conditioning system, such as the starting battery of the internal combustion engine or the battery accumulating energy from photovoltaic module.

## Brief description of the drawings

The present invention will be now described more in detail hereinafter with reference to the accompanying drawings, in which some, but not all embodiments of the invention are shown.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.

- FIG. 1 is a schematic illustration of a transport conditioning system according to a preferred embodiment of the present invention,
- FIG. 2 is a block diagram of the transport conditioning system of FIG. 1 showing more details of the electric power distribution assembly and of the control system, and
- FIG. 3 is a high-level block diagram of a control system of the DC voltage output of the power distribution system, according to an embodiment not part of the present invention.

## Detailed description

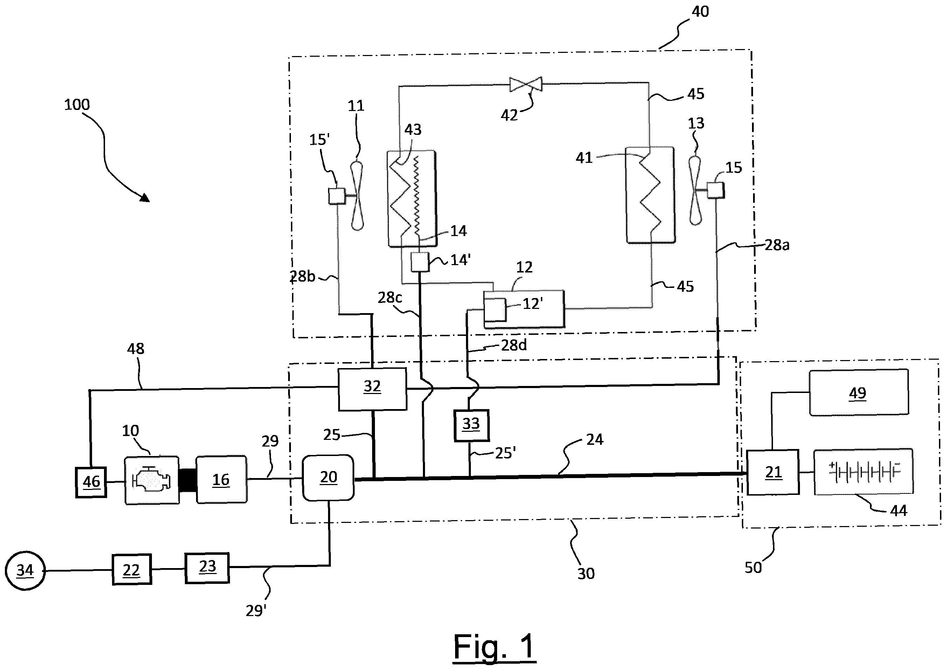

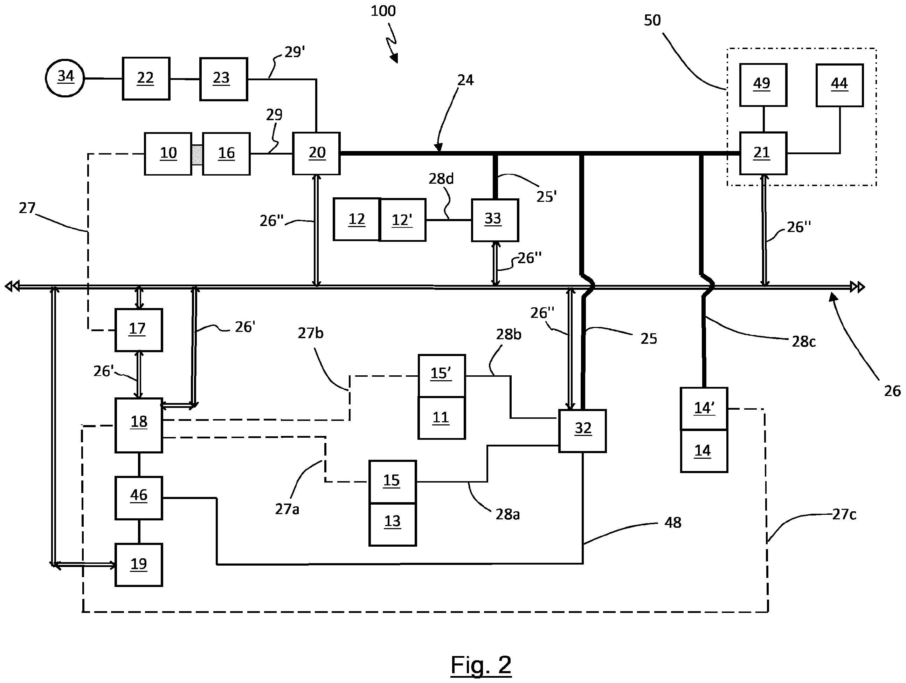

An transport conditioning system 100 according to a preferred embodiment of the present invention is illustrated in Figs. 1 and 2. Whereas Fig. 1 is a schematic illustration of the transport conditioning system 100 comprising the conditioning unit 40 (shown only in part and diagrammatically in Fig. 2) and the power distribution assembly 30 with indication of the power lines, Fig. 2 shows more details on the power control of the motor-driven components/devices of the transport conditioning system.

The transport conditioning system 100 comprises a transport conditioning unit 40 for providing temperature-controlled air and an electric power distribution assembly 30 for supplying power to the electrical components of the conditioning unit 40. The transport conditioning unit 40, of a conventional type, comprises a compressor 12 operated by an electric motor 12', referred to as the compressor motor, the compressor receiving a refrigerant fluid for increasing its pressure and temperature. The compressed refrigerant fluid flows through a condenser 41 that removes heat from the fluid, typically by air cooling. One or more condenser fans 13 are associated with the condenser 41, in particular directly facing the condenser 41, for air cooling of the refrigerant fluid passing through the condenser. The fluid than passes through an expansion valve 42 for lowering the pressure of the fluid and expanding the fluid in a gas (at least partially) and then through an evaporator 43 for absorbing heat from the fluid and transferring cooled air to the ambient. Transfer of air flow is enhanced by one or more evaporator fans 11 associated with the evaporator 43, in particular directly facing it. The condenser 41, the compressor 12, the expansion valve 42 and the evaporator 43 are fluidly connected via fluid lines 45 in a closed loop refrigerant circuit.

The compressor has a flow inlet, e.g. a suction port, and a flow outlet, e.g. a discharge port. The condenser 41, in particular the flow inlet thereof, is fluidly connected to the flow outlet of the compressor 12, whereas the evaporator 43, in particular the flow outlet thereof, is fluidly connected with the flow inlet of the compressor 12.

In an embodiment, the compressor 12 is a scroll compressor having an integral electric motor 12' placed inside the compressor body. Typically, the compressor motor 12' is an AC motor. Preferably, the compressor motor is a variable-speed motor, operating at a speed that is synchronous to the frequency of the power supply. For speed variation, a variable-frequency driving circuit (known per se) configured to output three-phase AC power at variable frequencies is used to operate the compressor motor.

The conditioning unit 40 may also comprise one or more electrical heaters 14 typically arranged in the proximity of the evaporator 43. The heaters 14 are provided with a heating regulator circuit 14' as driver for regulating the temperature of the heaters, for example by means of a PWM technique.

The one or more condenser fans 13 is driven by a respective motor 15, referred to as the first fan motor, typically integral with the fan. Preferably, the first fan motor is an electric motor equipped with an electronic driver for controlling its operation. The driver is configured to receive an external control signal via electric control line 27a from an electronic conditioning unit controller 18 to drive the first fan motor in accordance with the control signal.

More preferably, the first fan motor 15 is a brushless DC (DLDC) motor, for example a permanent magnet DLDC motor. In this embodiment and in a conventional manner, the driver is provided with an electronic integral inverter circuit with DC voltage input and AC voltage output and an electronic driving circuit for controlling the inverted AC signal and driving the fan motor 15 according to a standard electronic speed control, for example by means of a pulse width modulation (PWM) technique.

The one or more evaporator fans 11 are driven by a respective fan motor 15', typically integral with the fan and referred to as the second fan motor. Preferably, the fan motor 15' is an electric motor equipped with an electronic driver for controlling its operation. The electronic driver is configured to receive an external control signal via electric control line 27b, such as a pulse width modulation (PWM) signal, and to drive the fan motor in accordance with the control signal. More preferably, the fan motor 15' is a brushless DC motor, for example a permanent magnet DLDC motor.

For example, typical values of the DC voltage input for operation of the fan motors 15 and 15' are 24V or 110V.

The compressor 12, the condenser fan(s) 13 and the evaporator fan(s) 11 operate at the same time, while the electrical heaters 14 operate during heating or defrost mode.

Preferably, the transport conditioning system 100 is an onboard system.

The power supply of the transport conditioning system 100 comprises an electrical generator 16 driven by an internal combustion engine 10, typically a diesel engine. In particular, the electrical generator 16 can be driven by the engine drive shaft by direct mechanical coupling, by coupling through a transmission gear reducer or multiplier, or by a belt drive. In an embodiment, the transmission shaft of the internal combustion engine 10 is the drive shaft of the electrical generator 16, so as to avoid provision of further mechanical transmission means.

The internal combustion engine 10 can be either a dedicated engine for the powering of the transport conditioning unit 40, or the vehicle engine used for traction.

A starting battery 46, for example a 12V lead battery, is electrically connected to the internal combustion engine 10 for the switching on and off of the engine.

In a known manner, the engine 10 is provided with an engine intake throttle, for example a butterfly valve, for adjusting the intake fuel/air flow and a throttle position sensor for sensing in real time the throttle position (not shown in the figures). For operation of the intake throttle, an electric motor connected thereto is provided. The engine intake throttle can be a linear throttle. In a conventional manner, the intake throttle can be a DC motor driven control valve and the throttle positioning sensor can be a variable resistor.

The throttle positioning sensor is in communication with an electronic engine controller 17 via an electric control line 27. Electric control lines 27, 27a, 27b, 27c to/from electronic drivers for their actuation are represented in Fig. 2 with dashed lines.

The electronic engine controller 17 is apt to receive/transmits control signals and to be programmed for execution of closed/open loop speed controls and/or other electronic controls. To this end and in a conventional manner, the engine controller 17 comprises a microprocessor and an associated memory. The throttle sensor is configured to produce a sensing electric signal to be transmitted to the electronic engine controller 17. The electronic engine controller 17 is configured to receive the sensing electric signal indicative of an instantaneous throttle position value and to correlate that throttle position value to a value of running speed, typically represented by an RPM value, for example by using a lookup table stored in the memory of the engine controller 17, so as to determine the instantaneous engine running speed and produce an engine speed signal as an output control signal to be sent to the engine controller 17.

The electrical generator 16 is a synchronous generator having a power output connected to a power line 29 so as to supply AC power. In a preferred embodiment, the AC generator 16 is designed to output a three-phase voltage with variable frequency and amplitudes owed by the engine 10 running at different running speeds. The electrical power output from the generator can be varied from a minimum (voltage) amplitude level to a maximum amplitude level, corresponding, respectively, to a minimum RPM value to a maximum RPM value of the diesel engine 10. In a preferred embodiment, the electrical generator 16 is a permanent magnet synchronous generator. Preferably, the output voltage varies within the range from AC 280V and AC 550V.

The transport conditioning system 100 comprises a power distribution assembly 30 comprising an AC-DC voltage converter 20 electrically coupled as input to the AC generator 16. In particular, the AC-DC converter 20 is electrically connected as input to the output power line 29. The AC-DC voltage converter 20 comprises a rectifier circuit for converting the AC power into DC power. The AC-DC voltage converter 20 is designed to output a high DC voltage, preferably of from DC 400V to DC 800V, more preferably of from DC 500V to DC 700V. In a preferred embodiment, the DC voltage output is of 580V resulting from the rectification a standard three-phase 400V AC voltage.

The Applicant has noted that a high voltage provide flexibility in the power flow to the electrical loads.

Preferably, the AC-DC voltage converter 20 is designed to output a substantially constant DC voltage.

In a preferred embodiment, the AC-DC converter 20 is a three-phase full bridge converter. Preferably, the AC-DC converter operates as boost converter. In a preferred embodiment, the converter comprises an input three-phases diode bridge, a diode bridge rectifier circuit at the output and switching devices at the input bridge controlled through a duty cycle. The duty cycle that controls commutation of the switching devices is obtained by a control loop including two cascade loops: a current control loop cascaded to a voltage control loop. The control loop of the duty cycle adjusts the duty cycle in response to the input three-phase signal from the AC generator. Preferably, the duty cycle is of from 10% to 90%. An output one-level or two-level filter is preferably arranged to reduce the ripple in the output DC voltage.

In this embodiment, the AC generator 16 is designed to output a three-phase voltage output to be received by the three-phase diode bridge. The AC generator has three output AC terminals to be connected, respectively, to three input AC terminals of the AC-DC voltage converter, the input terminal being directly connected to the output power line 29 (in fact three power lines) of the AC generator 16.

Details are not shown in Fig. 2, which schematically represent power lines 29 and 24 as single lines with no representation of the input/output terminals.

The AC-DC voltage converter 20 has at least one DC power output terminal electrically connected to a DC power distribution bus 24. Preferably, the DC power distribution bus is directly connected to the at least one output DC terminal of the AC-DC voltage converter.

Preferably, the AC-DC converter 20 has two DC power output terminals, in particular a positive terminal and a negative terminal, connected to the DC distribution bus 24, which may be implemented with a 2-phase high-voltage busbar comprising two (positive and negative) conductors carrying a high DC voltage.

The electrical components of the conditioning unit 40, which need to be powered for operation and thus absorb power from the power distribution assembly 30, are collectively indicated as electrical loads. The transport conditioning unit 40 comprises a plurality of electrical loads. In the embodiment shown in the figures, the electrical loads comprise the compressor motor 12', the first fan motor 15, the second fan motor 15' and the electrical resistance heater 14.

According to a main feature of the present invention, a common DC distribution bus supplies DC power to at least one and preferably to a plurality of loads of the conditioning unit 40.

In a preferred embodiment, such as that shown in Figs. 1 and 2, each the plurality of loads is electrically coupled to the DC distribution bus 24, for example connected to the bus via supply power lines 25, 28, 25', 48, 28a, 28b, 28c, 28d. Preferably, the DC distribution bus 24 powers all the electrical loads of the transport conditioning unit 40. More preferably, the DC distribution bus 24 powers also the electronic control components such as the electronic controllers 17, 18 and the electric control lines for actuation of the loads and/or a CAN bus 26 for control communication signals from/to the controllers.

Preferably, the power distribution assembly 30 comprises only a single DC power distribution bus 24 electrically coupled to the AC-DC voltage converter 20.

Preferably, each electrical load is electrically coupled in parallel to the common DC power distribution bus 24 by means of supply power lines 25, 25', 28a-28d supplying said loads.

As most of the power consuming components of the conditioning unit 40 are commonly set to operate with low voltage (AC or DC) where necessary, an electrical load is connected to the DC distribution bus 24 through a voltage conversion device, in the description and claims generally indicated as load voltage conversion device, which takes the current running on high voltage in the DC distribution bus 24 as input and generates a suitable specific output AC or DC voltage required by the relevant electrical load.

With reference to the embodiment of the figures, first and second fan motors 15, 15' are electrically connected to the DC distribution bus 24 through a load voltage conversion device 32, which is a DC-DC voltage converter configured to convert the high voltage level conveyed by the bus 24 to a lower voltage level. The DC-DC voltage converter 32 is electrically coupled, preferably directly connected, to the DC distribution bus 24 via supply power line 25. The DC-DC voltage converter 32 comprises an input power terminal, which is a DC terminal, configured to receive high voltage, for example DC 600V, from the bus 24 and a plurality of output power terminals at lower voltage levels. Preferably, the load voltage converter 32 is a multi-output DC/DC converter with multiple output terminals, each output terminal supplying single-phase power at a voltage level to a respective electrical load. Output DC voltage levels can be different from one another. In ways per se known, the multi-output DC-DC voltage converter 32 comprises a plurality of DC-DC conversion modules in parallel. The load voltage converter 32 shown in the figures comprises three output DC terminals.

The output power terminals of the DC/DC voltage converter 32 are connected to the relevant loads through respective DC power lines. First and second fan motors 15, 15' are electrically coupled to the DC/DC voltage converter 32 via respective supply power lines 28a, 28b.

Preferably, the starting battery 46 for the internal combustion engine 10 is powered by the power distribution bus 24. As starting batteries for diesel engines commonly employed in transport refrigeration systems operate at low voltage, a power conversion of the input high voltage is typically needed. In Fig. 2, an output terminal of the multi-output DC/DC voltage converter 32 is connected to the starting battery 46 via supply power line 48.

For example, the multi-output DC/DC voltage converter 32 comprises an output power terminal at 24 DCV for powering the condenser fan(s) 13, an output power terminal at 110 DCV for powering the evaporator fan(s) 11 and an output power terminal at 12 DCV for the powering of the starting battery 46.

In the present embodiment, the electrical heater 14, typically a plurality of heaters, are DC resistance heaters accepting a pick-up voltage in a high-voltage range, e.g. DC 600 V, and therefore do not need power conversion of the bus voltage. Electrical heaters 14 are directly connected to the power distribution bus 24 via a supply power line 28c, in particular to the temperature regulating driver 14'.

In another embodiment, not shown in the figures, power conversion from the DC distribution bus 24 to the loads accepting a DC low voltage relative to the high voltage carried by the power distribution bus 24 is achieved by a respective DC-DC converter, each being electrically coupled as input to the power distribution bus 24 and as output to the relevant load, in particular fan motors 15, 15' and, optionally, to the starting battery 46.

In some embodiments, such as the preferred embodiment shown in Fig. 2, the compressor 12 is run by an AC compressor motor 12' driven by a compressor driver (not indicated in the figure), preferably a variable speed driver for adjusting the motor speed to the cooling demand. Preferably, the compressor motor 12' is a DLDC motor. A load power conversion device 33, which is a DC-AC power inverter, receives the high-voltage DC signal from the power distribution bus 24, and generates an AC power supply for the compressor motor. In particular, the DC-AC power inverter 33 is electrically coupled as input to the power distribution bus 24 and electrically coupled as output to the compressor motor 12'. In an embodiment, the DC-AC power inverter 33 is configured to convert the input high DC voltage to a three-phase voltage varying in amplitude or in frequency by the variable speed driver to control motor speed from 1200 RPM to 6000 RPM.

In ways per se known, the transport conditioning system 100 is provided with a temperature control system for controlling the temperature of the inner space of the cargo storage compartment by using a plurality of temperature and/or pressures sensors placed in the inner space and in communication with the electronic refrigeration controller 18. The refrigeration controller 18 is apt to receive/transmits control signals and to be programmed for execution of closed/open loop speed controls and/or other electronic controls. To this end and in a conventional manner, the refrigeration controller 18 comprises a microprocessor and an associated memory.

Bi-directional transmission of control signals to the electronic controllers 17 and 18 are on a controller area network (CAN bus) 26, which comprises CAN bus lines 26', 26" carrying communication signals and connecting the AC-DC voltage converter 20 to at least one electronic controller 17, 18 and connecting the controllers one to another. In particular, the CAN bus lines connect all load voltage conversion devices, to at least one controller.

The power supply assembly 30 consistent with the present invention allows employment of a plurality of different power sources. The internal combustion engine 10 and the electric generator 16 driven by the engine constitutes the primary power source for the electrical loads of the transport conditioning unit 40. Preferably, the AC-DC voltage converter 20 is electrically connectable to a utility power grid 34 as alternative electrical power source, for example during standstill of the vehicle.

When the power is provided by the utility power grid 34, the internal combustion engine 10 and typically also the electric AC generator 16 are off. The AC-DC voltage converter 20 comprises, further to the input terminal(s) of the AC-DC converter electrically coupled to the AC generator 16, second input terminals (in particular three-phase AC input terminals) that can be connected to one end of an electrical cable 29' provided, at the opposite end, with an AC plug 22, connectable to the utility grid 34 via a socket. For example, the AC plug 22 is a AC 400V 50 Hz male plug. Once the AC-DC voltage converter 20 is connected to the utility grid 34, it supplies a high voltage DC power output to be distributed to the electrical loads by means of the DC power distribution bus 24. Preferably, the power supply assembly 30 further comprises an AC power filter 23, such as a passive power filter, for filtering high-order harmonics or other voltage distortions.

The transport conditioning system 100 preferably comprises a human machine interface (HMI) 19 logically connected, in particular via CAN bus 26, to the electronic equipment of the system. In an embodiment, the HMI provides a visual representation of the control system and of the operating parameters of the electrical loads and components, and allows real time data acquisition input by an operator, including on/off of the starting battery 46, which turns on the electronic equipment for the starting of the engine 10.

According to the present invention, the transport conditioning system 100 comprises a solar-powered battery assembly 50 providing temporary supplemental power to the electrical loads. For example, use of the battery assembly 50 can be desired when the engine 10 is a dedicated engine, often not compliant with the emission standards in urban areas, and it must be turned off. The solar-powered battery assembly 50 comprises a photovoltaic panel module 49, which typically generates a variable DC voltage output, which is dependent on several factors, chiefly the incident solar radiation. An output of the photovoltaic module 49 is connected to a standard battery pack 44, such as a Li-Ion battery, equipped with a battery charger, via a DC-DC voltage converter 21. An output of the DC-DC voltage converter 21 is connected to the DC power distribution bus 24. The DC-DC voltage converter 21 is designed to convert the DC voltage output from the photovoltaic power module 49 to a high DC voltage level within the range of values provided by the AC-DC voltage converter 20.

In another embodiment (not shown in the figures and outside the scope of the appended claims), a battery pack is directly connected to the DC power distribution bus 24 to be charged either from the utility power grid 34 or from the engine 10 driving the AC generator 16.

When the plurality of loads is powered by the battery pack 44, which has a relatively low DC output, for example DC 48V, the DC-DC voltage converter 21 transforms the output DC voltage from the battery pack into a high DC voltage, for example DC 600V. When the battery 44 is charged by another power source, such as the AC generator 16 or the utility grid 34, through the high voltage power distribution bus 24, the DC-DC converter 21 transforms the high DC voltage into a low DC voltage.

The Applicant has noted that, although the AC-DC converter is preferably designed to provide a substantially constant DC voltage output across a range of AC amplitude and frequency values, in some circumstances, for example due to an unbalance to power generated by the engine-driven generator and power requested by the loads, the pre-set midpoint voltage value may have the tendency to be unstable during operation. Preferably, a control system of the DC voltage output from the energy chain is implemented to ensure stable operation of the power distribution system within a controlled range of DC voltage values supplied to the DC power distribution bus.

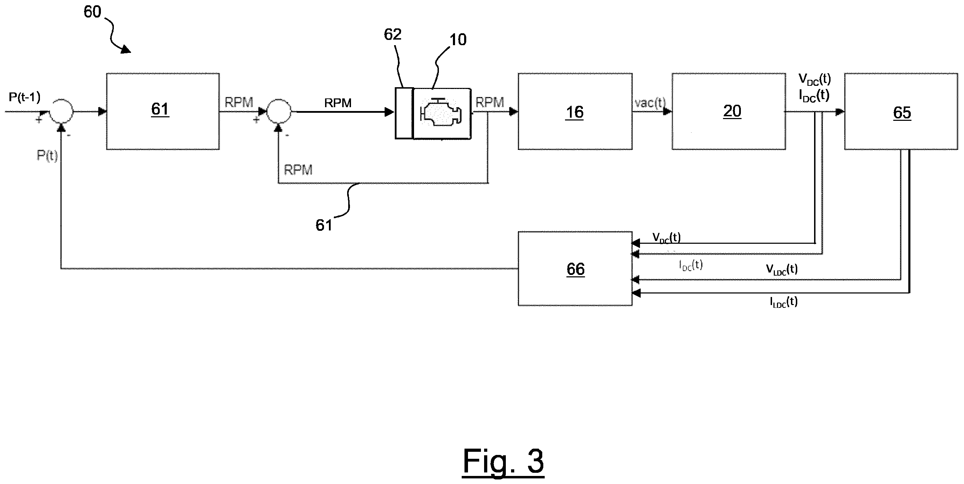

Figure 3 shows a high-level block diagram of a control system of the DC voltage output of the power distribution system, according to an embodiment not part of the present invention. The control system 60 is adapted to execute the control of DC voltage output from the AC-DC converter 20 of the power distribution system 30 of the transport conditioning system 100 described with reference to Figs. 1 and 2. The control system is a closed loop control system.

More generally, the method is a computer-implemented method running on an electronic controller. In particular, the method is executed in a microprocessor of the controller while lookup tables and/or preset operating values are stored in a memory associated with the microprocessor. Preferably, the control algorithms implementing the method run on the electronic refrigeration controller 18. The CAN bus 26 provides for the bi-directional transmission of the control signals. For example, measured instantaneous voltage and current values, $V_{LDC}(t)$ and $I_{LDC}(t)$ are transmitted to the refrigeration controller 18 via the CAN bus 26.

An instantaneous DC output power conveyed at the output of the AC-DC converter 20 is determined based on an instantaneous DC voltage value $Voc(t)$ measured at the output of the AC-DC converter 20 and on an instantaneous direct current $I_{DC}(T)$ measured at the output of the AC-DC converter, measured at the same time t. For example, $Voc(t)$ and $I_{DC}(T)$ are separately and simultaneously measured by a volt meter and an ampere meter (not indicated in the figure), respectively, arranged at an output terminal of the AC-DC converter 20. At calculation block 66, the instantaneous power value, $P_{DC}(t) = V_{DC}(t) \cdot I_{DC}(t)$, is computed.

The computed instantaneous power value $P(t)$ is fed into a controller block 61, in particular a proportional-integral (PI) controller block, which takes the electric power $P_{DC}(t)$ as input to convert it into a engine horsepower value $P_m{}^t$ for the engine 10. In an embodiment, the conversion between electrical power and engine horsepower is computed by using a preset equation stored in the controller block 61. In particular, the horsepower is proportional to the electric power by means of a conversion factor determined by the energy conversion efficiency and characteristics of the electric chain for the DC voltage generation. The conversion factor, which can be empirically determined, can be a single scalar value for the operative range of electric powers $P_{DC}$ or a plurality of scalar values corresponding to different energy conversion efficiencies valid for different running speeds and/or emitted power.

In another embodiment, determining the $P_m^t$ value comprises performing a read of a lookup table describing a numerical relationship between engine horsepower of the engine and electrical DC power output from the AC-DC converter.

In an embodiment, the logic of the PI controller block 61 is included in the microprocessor of the engine controller 17 whereas equations, preset values, such as the energy conversion values, and lookup tables are stored in the memory associated with the microcontroller or data can be stored in the memory associated with the microprocessor of the refrigeration controller 18 logically connected with the engine controller 17.

At the controller block 61, a nominal running speed value corresponding to the horsepower value $P_m^t$ is determined based on an equation or a lookup table describing a numerical relationship between engine horsepower values and running speed values, which can be represented by a curve power [kW] vs. running speed [RPM]. The engine controller 17 then commands the engine 10 to run at the nominal RPM value and thus to drive the AC generator 16 accordingly.

The closed loop-control system recursively computes a nominal RPM value associated to an instantaneous DC power value $P_{DC}$ at times subsequent to the time t and feeds that value to the engine 10.

According to some examples, a method, which not part of the present invention, is provided for controlling the DC voltage output from the power distribution system 30 for powering the plurality of electrical loads, the method comprising:

a) measuring an instantaneous DC voltage value Voc(t) and an instantaneous direct current $I_{DC}(T)$ at the output of the AC-DC converter 20;
b) computing a value of instantaneous DC power, $P_{DC}(t)$, based on the measured values $I_{DC}(T)$ and $V_{DC}(t)$;
c) determining an engine horsepower value $P_m^t$ associated with the instantaneous DC power by converting the instantaneous value $P_{DC}(t)$ into an engine horsepower value $P_m^t$ by means of a conversion factor associated with an energy conversion efficiency;
d) computing a nominal RPM value corresponding to the engine horsepower value $P_m^t$ based on an equation or on a lookup table describing a numerical relationship between engine horsepower values and the RPM values; and
e) running the engine at the nominal RPM value.

After step e), the method comprises repeating steps a) to e).

In another example (not part of the present invention), step c) of determining the $P_m^t$ value comprises performing a read of a lookup table describing a numerical relationship between engine horsepower values and electrical DC power values associated with the AC-DC converter 20.

In ways per se known, the instantaneous DC voltage value Voc(t) and the instantaneous direct current value $I_{DC}(T)$ at the output of the AC-DC converter 20 can be carried out, respectively, by a volt meter and an ampere meter (not shown in the figures) electrically coupled to the output terminals of the AC-DC converter or to the DC power distribution bus 24, preferably upstream any connection point of the bus 24 with the supply power lines conveying power to the loads.

Preferably, before setting the diesel engine 10 to run at the nominal RPM value, the method comprises a secondary control loop, indicated with arrow 63 in Fig. 3, nested inside the primary control loop comprising steps a) to d), to determine an actual instantaneous engine speed, in particular the instantaneous RPM value at time t, RPM(t), simultaneously to the measurements $V_{DC}(t)$, $I_{DC}(t)$. In ways per se known, the instantaneous RPM value can measured by a RPM sensor (not indicated in the figure) designed for sensing the revolutions of the driving shaft of the engine.

Preferably, the instantaneous RPM value is determined by measuring the frequency and the voltage at the output of the AC generator 16. This can be advantageous in terms of reliability and costs.

Preferably, the method, which is not part of the present invention, comprises:

- determining an actual instantaneous RPM value of the engine, wherein step d) comprises, after computing a nominal RPM value:
- comparing the instantaneous RPM value with the nominal RPM value,
- if a difference between the nominal RPM value and the instantaneous RPM value larger than a preset RPM difference value, adjusting the throttle position to the nominal RPM value so as to run the engine at that speed value, and
- if the difference between the nominal RPM value and the instantaneous RPM value is zero or within the preset RPM difference value, taking no action so as to maintain the running speed to the nominal RPM value.

The algorithm determines whether to take or not take action depending on the difference between the instantaneous RPM value and the nominal RPM value. For example, the preset RPM difference value can be a percentage difference of 1%.

Each electrical load of the plurality of electrical loads draws current from the DC bus resulting in electric power absorption. As power demand can change during operation of the conditioning unit, for example temperature pulldown vs. temperature maintenance, the current drawn from the DC bus by one or more loads, may change and this can result in a voltage drop in the DC bus or more generally in fluctuations of the DC voltage carried in the bus.

In some examples, an instantaneous value of the power absorbed by the plurality of loads is determined simultaneously to the determination of the instantaneous power at the output of the AC-DC power converter 20, $P_{DC}(t)$. To this end and in ways per se known, the "local" instantaneous DC voltage and current, $V_{LDC}(t)$ and $I_{LDC}(t)$, of each load are measured, respectively, by a volt meter and an ampere meter (not indicated in the figures) electrically coupled to the relevant supply power line 25, 25', 28a-28d, connecting the load to the DC power distribution bus 24. In case a load voltage conversion device is arranged in the supply power line, the meters are placed in the portion of the supply line 25, 25' connecting the voltage conversion device to the DC bus 24. From the measurement of $V_{LDC}(t)$ and $I_{LDC}(t)$ for each load (block 65), an instantaneous load power value $P_L(t)$ is calculated. The sum of the plurality of load power values calculated for each load provides an estimate of the instantaneous electric power absorbed by the transport conditioning unit 40 and it is referred to as the instantaneous total absorbed power value, $P_{abs}(t)$. The $P_{abs}(t)$ value can be compared with the value $P_{DC}(t)$ to determine if there exists a significant discrepancy between the two values, indicative of power losses along the DC bus and/or unbalanced loads. This information can be displayed on the HMI 19 for a user to control the operation of the conditioning unit 40.

In an example, the controller 18 is configured to receive a plurality of pair of instantaneous voltage and current values, $V_{LDC}(t)$ and $I_{LDC}(t)$, associated to each load of the plurality, to compute a corresponding instantaneous load power value $P_L(t)$. An instantaneous total absorbed power value, $P_{abs}(t)$, is computed as the sum of the plurality of instantaneous load power values, $P_L(t)$,

$$P_{abs}(t) = \sum_1^n P_L(t)I_i$$ with n the number of electric loads of the conditioning unit 40.

Preferably, the instantaneous current $I_{LDC}(t)$ is measured at the respective supply power line of each load. For example, the current is measured by means of a respective current meter connected in series to each load in a portion of the supply power line between the converter and the load, at the proximity of the DC bus.

The Applicant has observed that it would be advantageous to operate the engine so as to maintain fuel consumption and noise at the minimum level while satisfying the power demand of the electrical loads. The Applicant has observed that being the power distribution system able to accept a relatively wide range of input AC voltages and frequencies, it is possible to operate the engine across a range of running speeds and to select a suitable running speed providing the desired electric DC power at the output of the AC-DC converter 20 while keeping fuel consumption low. According to some preferred examples, the PI controller block 61 stores in a non-volatile memory a lookup table implementing a plurality of data tables (data table array), each data table mapping a numerical relationship between engine horsepower and running speed at a constant fuel consumption. Each data table stores a plurality of horsepower values, e.g. in kW, and a corresponding plurality of running speed values, e.g. in RPM, for a given fuel consumption value, expressed for example in g/kWh. Therefore, the data tables of the array implemented by the lookup table are each associated with a respective value of fuel consumption, the values of fuel consumption being different from one another.

In a two-dimensional graph horsepower-RPM, values forming each data table of the array of data tables can be represented by a respective curve associated with a value of fuel consumption. Data tables can be received and stored by the PI controller block 61 as input data information, for example originating from horsepower-RPM curves empirically determined.

Preferably, the method (not part of the present invention) of controlling the DC voltage output from the power distribution system 30 comprises, preferably before step e):

- storing a lookup table implementing a plurality of data tables, each data table describing a numerical relationship between engine horsepower values and running speed values at a constant value of fuel consumption, each data table being associated with a value of fuel consumption so as a respective plurality of values of fuel consumption is associated with the plurality of data tables,

wherein step e) comprises computing a respective running speed value corresponding to the engine horsepower value $P_m{}^t$ from each data table of the lookup table and selecting a running speed value from the data table having the lowest value of fuel consumption of the plurality of fuel consumption values, the selected running speed value being the nominal running speed value.

Where applicable, method steps described herein may be embodied or executed as instructions stored on a non-transitory computer-readable memory medium or media, such as the memory of the electronic engine controller 17 and/or of the electronic refrigeration controller 18. Although, in the present description, reference may be made to a specific controller as embodying instructions for executing a control algorithm or part of it, it should be understood that the method steps can be implemented in any electronic controller of the transport or in a plurality of controllers being logically linked to one another.

Those skilled in the art will recognize that it is possible to combine the various features of the embodiments described above in order to obtain further embodiments, all of which are in any case encompassed by the present invention as defined by the following claims.

**Claims**

1. A transport conditioning system (100) comprising:

   - a transport conditioning unit (40) for controlling the temperature within an inner space of a cargo storage compartment mounted on a transport vehicle, the transport conditioning unit (40) comprising a compressor (12), a condenser (41) and a condenser fan (13) associated with the condenser (12) for providing air flow thereover, an evaporator (43), an evaporator fan (11) associated with the evaporator (43) for providing air flow thereover, and a plurality of electricals loads (12', 15, 15', 14) comprising an electric compressor motor (12') for driving the compressor (12) and a first electric fan motor (15) for driving the condenser fan (13),
   - an electric AC generator (16) driven by an internal combustion engine (10), and
   - an electric power distribution assembly (30) for powering at least one electrical load of the plurality of electrical loads (12', 15, 15', 14), the assembly comprising
   an AC-DC voltage converter (20) electrically coupled as input to the electric AC generator (16) for receiving AC power and configured to convert the AC power to DC power so as to supply DC voltage as output, and
   a DC power distribution bus (24) electrically coupled as input to the AC-DC voltage converter (20) and configured to carry the DC voltage,

   wherein the least one electric load is powered by the DC power distribution bus (24), said least one electric load being the compressor motor (12'), wherein the transport conditioning system (100) comprises a solar-powered battery assembly (50) comprising a photovoltaic panel module (49) and a battery pack (44) equipped with a battery charger, the transport conditioning system (100) is **characterised in that** the photovoltaic panel module (49) has an output connected to the battery pack (44) via a DC-DC voltage converter (21), wherein an output of the DC-DC voltage converter (21) is connected to the DC power distribution bus (24).

2. The transport conditioning system (100) of claim 1, wherein the AC-DC voltage converter (20) is configured to convert the AC power to DC power at a high DC voltage of from DC 400 V to DC 800V on the DC power distribution bus (24).

3. The transport conditioning system (100) of claim 1 or 2, wherein the electric AC generator (16) is a synchronous generator designed to output a three-phase voltage to be received by the AC-DC voltage converter (20), the three-phase output voltage being comprised between AC 280V and AC 550V.

4. The transport conditioning system (100) of one or more of the preceding claims, wherein the AC-DC voltage converter (20) is a full bridge converter.

5. The transport conditioning system (100) of one or more of the preceding claims, wherein each of the plurality of electrical loads is powered by the DC power distribution bus (24), the compressor motor (12') and the first electric fan motor (15) being electrically coupled to the power distribution bus (24).

6. The transport conditioning system (100) of one or more of the preceding claims, wherein the electric power distribution assembly (30) comprises a first load voltage conversion device (32, 33) electrically coupled as input to the DC power distribution bus (24) and delivering voltage to an electrical load of the plurality of electrical loads (12', 15, 15', 14), said electrical load being electrically coupled to the DC power distribution bus (24) via the first load voltage conversion device (32, 33).

7. The transport conditioning system (100) of claim 6, wherein the first load voltage conversion device is a DC-AC inverter (33) electrically coupled as input to the DC power distribution bus (24) and as output to the compressor motor (12') and being configured to convert the DC voltage received from the DC power distribution bus (24) into a AC voltage to be supplied to the compressor motor (12').

8. The transport conditioning system (100) of claim 6 or 7, when dependent on claim 5, wherein the electric power distribution assembly (30) comprises a second load voltage conversion device (32), the second load voltage conversion device being a DC-DC voltage converter (32) electrically coupled as input to the DC power distribution bus (24) and as output to the first fan motor (15), the DC-DC voltage converter (32) configured to convert the DC voltage received from the DC power distribution bus (24) into a different DC voltage to be supplied to the first fan motor (15).

9. The transport conditioning system (100) of one or more of the preceding claims, wherein the plurality of electrical loads comprises a second electric fan motor (15') for driving the evaporator fan (11), the second electric fan motor being powered by the DC power distribution bus (24).

10. The transport conditioning (100) system of one or more of the preceding claims, wherein a load voltage conversion device is electrically coupled as input to the power distribution bus (24) and as output to the second electric fan motor (15'), to convert the DC voltage received from the DC power distribution bus (24) into a different DC voltage to be supplied to the second electric fan motor (15').

11. The transport conditioning system of one or more of the preceding claims, wherein the electric AC generator (16) comprises output AC terminals and the electric AC-DC voltage converter (20) comprises first input terminals electrically connected to the output AC terminals and second input terminals connectable to a utility power grid (34) supplying AC voltage.

12. The transport conditioning system of claim 1, wherein the DC-DC voltage converter (21) is designed to convert the DC voltage output from the photovoltaic power module (49) to a high DC voltage within the range of values provided by the AC-DC voltage converter (20).

13. The transport conditioning system of claim 1, wherein,

when the plurality of loads (12', 15, 15', 14) is powered by the battery pack (44), the DC-DC voltage converter (21) is configured to transform a low output DC voltage from the battery pack (44) into a high DC voltage, and
when the battery pack (44) is charged by the AC generator (16) or by an utility grid (34), through the DC power distribution bus (24), the DC-DC voltage converter (21) is configured to transform the high DC voltage into the low output DC voltage.

**Patentansprüche**

1. Transportkonditionierungssystem (100), umfassend:

- eine Transportkonditionierungseinheit (40) zum Steuern der Temperatur in einem Innenraum eines auf einem Transportfahrzeug montierten Laderaums, wobei die Transportkonditionierungseinheit (40) einen Kompressor (12), einen Kondensator (41) und ein mit dem Kondensator (12) assoziiertes Kondensatorgebläse (13) zum Bereitstellen eines Luftstroms darüber, einen Verdampfer (43), ein mit dem Verdampfer (43) assoziiertes Verdampfergebläse (11) zum Bereitstellen eines Luftstroms darüber umfasst und eine Vielzahl von elektrischen Lasten (12', 15, 15', 14) einen elektrischen Kompressormotor (12') zum Antreiben des Kompressors (12) und einen ersten elektrischen Gebläsemotor (15) zum Antreiben des Kondensatorgebläses (13) umfasst,
- einen elektrischen AC-Generator (16), der von einem Verbrennungsmotor (10) angetrieben wird, und
- eine Stromverteilungsbaugruppe (30) zum Versorgen mindestens einer elektrischen Last der Vielzahl von elektrischen Lasten (12', 15, 15', 14), wobei die Baugruppe Folgendes umfasst
einen AC-DC-Spannungswandler (20), der elektrisch als Eingang an den elektrischen AC-Generator (16) zum Empfangen von Wechselstrom gekoppelt ist und konfiguriert ist, um den Wechselstrom in Gleichstrom umzuwandeln, um DC-Spannung als Ausgang zuzuführen, und einen Gleichstromverteilungsbus (24), der elektrisch als Eingang an den AC-DC-Spannungswandler (20) gekoppelt und dazu konfiguriert ist, die DC-Spannung zu führen,
wobei die mindestens eine elektrische Last durch den Gleichstromverteilungsbus (24) versorgt wird, wobei die mindestens eine elektrische Last der Kompressormotor (12') ist, wobei das Transportkonditionierungssystem (100) eine solarbetriebene Batteriebaugruppe (50) umfasst, die ein Photovoltaik-Panelmodul (49) und einen Batteriepack (44), der mit einem Batterieladegerät ausgestattet ist, umfasst,
das Transportkonditionierungssystem (100) **dadurch gekennzeichnet ist, dass** das Photovoltaik-Panelmodul (49) einen Ausgang aufweist, der über einen DC-DC-Spannungswandler (21) mit dem Batteriepack (44) verbunden ist, wobei ein Ausgang des DC-DC-Spannungswandlers (21) mit dem Gleichstromverteilungsbus (24) verbunden ist.

2. Transportkonditionierungssystem (100) nach Anspruch 1, wobei der AC-DC-Spannungswandler (20) konfiguriert ist, um den Wechselstrom in Gleichstrom bei einer hohen DC-Spannung von DC 400 V bis DC 800 V auf dem Gleichstromverteilungsbus (24) umzuwandeln.

3. Transportkonditionierungssystem (100) nach Anspruch 1 oder 2, wobei der elektrische AC-Generator (16) ein Synchrongenerator ist, der ausgelegt ist, um eine Dreiphasenspannung auszugeben, die von dem AC-DC-Spannungswandler (20) empfangen werden soll, wobei die Dreiphasenausgangsspannung zwischen AC 280V und AC 550V umfasst ist.

4. Transportkonditionierungssystem (100) nach einem oder mehreren der vorhergehenden Ansprüche, wobei der AC-DC-Spannungswandler (20) ein Vollbrückenwandler ist.

5. Transportkonditionierungssystem (100) nach einem oder mehreren der vorhergehenden Ansprüche, wobei jede der Vielzahl von elektrischen Lasten durch den Gleichstromverteilungsbus (24) versorgt wird, wobei der Kompressormotor (12') und der erste elektrische Gebläsemotor (15) elektrisch an den Stromverteilungsbus (24) gekoppelt sind.

6. Transportkonditionierungssystem (100) nach einem oder mehreren der vorhergehenden Ansprüche, wobei die Stromverteilungsbaugruppe (30) eine erste Lastspannungsumwandlungsvorrichtung (32, 33) umfasst, die elektrisch als Eingang an den Gleichstromleistungsverteilungsbus (24) gekoppelt ist und Spannung an eine elektrische Last der Vielzahl von elektrischen Lasten (12', 15, 15', 14) liefert, wobei die elektrische Last über die erste Lastspannungsumwandlungsvorrichtung (32, 33) elektrisch an den Gleichstromleistungsverteilungsbus (24) gekoppelt ist.

7. Transportkonditionierungssystem (100) nach Anspruch 6, wobei die erste Lastspannungsumwandlungsvorrichtung ein DC-AC-Wechselrichter (33) ist, der elektrisch als Eingang an den Gleichstromverteilung (24) und als Ausgang an den Kompressormotor (12') gekoppelt ist und dazu konfiguriert ist, die von dem Gleichstromverteilung (24) empfangene DC-Spannung in eine dem Kompressormotor (12') zuzuführende AC-Spannung umzuwandeln.

8. Transportkonditionierungssystem (100) nach Anspruch 6 oder 7, wenn abhängig von Anspruch 5, wobei die Stromverteilungsbaugruppe (30) eine zweite Lastspannungsumwandlungsvorrichtung (32) umfasst, wobei die zweite Lastspannungsumwandlungsvorrichtung ein DC-DC-Spannungswandler (32) ist, der elektrisch als Eingang an den Gleichstromverteilung (24) und als Ausgang an den ersten Gebläsemotor (15) gekoppelt ist, wobei der DC-DC-Spannungswandler (32) konfiguriert ist, um die von dem Gleichstromverteilung (24) empfangene DC-Spannung in eine unterschiedliche DC-Spannung umzuwandeln, die dem ersten Gebläsemotor (15) zuzuführen ist.

9. Transportkonditionierungssystem (100) nach einem oder mehreren der vorhergehenden Ansprüche, wobei die Vielzahl von elektrischen Lasten einen zweiten elektrischen Gebläsemotor (15') zum Antreiben des Verdampfergebläses (11) umfasst, wobei der zweite elektrische Gebläsemotor durch den Gleichstromverteilungsbus (24) versorgt wird.

10. Transportkonditionierungssystem (100) nach einem oder mehreren der vorhergehenden Ansprüche, wobei eine Lastspannungsumwandlungsvorrichtung elektrisch als Eingang an den Stromverteilungsbus (24) und als Ausgang an den zweiten elektrischen Gebläsemotor (15') gekoppelt ist, um die von dem Gleichstromverteilungsbus (24) empfangene Gleichspannung in eine unterschiedliche Gleichspannung umzuwandeln, die dem zweiten elektrischen Gebläsemotor (15') zuzuführen ist.

11. Transportkonditionierungssystem nach einem oder mehreren der vorhergehenden Ansprüche, wobei der elektrische Wechselstromgenerator (16) Ausgangswechselstromanschlüsse umfasst und der elektrische AC-DC-Spannungswandler (20) erste Eingangsanschlüsse, die elektrisch mit den Ausgangswechselstromanschlüssen verbunden sind, und zweite Eingangsanschlüsse, die mit einem Energieversorgungsnetz (34) verbindbar sind, das Wechselspannung zuführt, umfasst.

12. Transportkonditionierungssystem nach Anspruch 1, wobei der DC-DC-Spannungswandler (21) dazu ausgelegt ist, die von dem Photovoltaik-Leistungsmodul (49) ausgegebene Gleichspannung in eine hohe Gleichspannung innerhalb des Wertebereichs umzuwandeln, der durch den AC-DC-Spannungswandler (20) bereitgestellt wird.

13. Transportkonditionierungssystem nach Anspruch 1, wobei

    wenn die Vielzahl von Lasten (12', 15, 15', 14) durch den Batteriepack (44) versorgt wird, der DC-DC-Spannungswandler (21) konfiguriert ist, um eine niedrige Ausgangsgleichspannung von dem Batteriepack (44) in eine hohe Gleichspannung umzuwandeln, und
    wenn der Batteriepack (44) durch den Wechselstromgenerator (16) oder durch ein Versorgungsnetz (34) über den Gleichstromverteilungsbus (24) geladen wird, der DC-DC-Spannungswandler (21) dazu konfiguriert ist, die hohe Gleichspannung in die niedrige Ausgangsgleichspannung umzuwandeln.

## Revendications

1. Système de conditionnement de transport (100) comprenant :

    - une unité de conditionnement de transport (40) pour contrôler la température dans un espace intérieur d'un compartiment de stockage de marchandises monté sur un véhicule de transport, l'unité de conditionnement de transport (40) comprenant un compresseur (12), un condenseur (41) et un ventilateur de condenseur (13) associé au condenseur (12) pour fournir un flux d'air à ce dernier, un évaporateur (43), un ventilateur d'évaporateur (11) associé à l'évaporateur (43) pour assurer le flux d'air, et une pluralité de charges électriques (12', 15, 15', 14) comprenant un moteur électrique de compresseur (12') pour entraîner le compresseur (12) et un premier moteur électrique de ventilateur (15) pour entraîner le ventilateur de condenseur (13),

- un générateur électrique CA (16) entraîné par un moteur à combustion interne (10), et

- un ensemble de distribution d'énergie électrique (30) pour alimenter au moins une charge électrique de la pluralité de charges électriques (12', 15, 15', 14), l'ensemble comprenant un convertisseur de tension CA-CC (20) couplé électriquement en tant qu'entrée au générateur électrique CA (16) pour recevoir l'énergie CA et configuré pour convertir l'énergie CA en énergie CC afin de fournir une tension CC en tant que sortie, et un bus de distribution d'énergie CC (24) couplé électriquement en tant qu'entrée au convertisseur de tension CA-CC (20) et configuré pour transporter la tension CC,

dans lequel l'au moins une charge électrique est alimentée par le bus de distribution d'énergie CC (24), ladite au moins une charge électrique étant le moteur du compresseur (12'), dans lequel le système de conditionnement de transport (100) comprend un ensemble de batteries solaires (50) comprenant un module de panneau photovoltaïque (49) et un bloc-batterie (44) équipé d'un chargeur de batterie,

le système de conditionnement de transport (100) est **caractérisé en ce que** le module de panneau photovoltaïque (49) a une sortie connectée au bloc-batterie (44) par l'intermédiaire d'un convertisseur de tension CC-CC (21), dans lequel une sortie du convertisseur de tension CC-CC (21) est connectée au bus de distribution d'énergie CC (24).

2. Système de conditionnement de transport (100) selon la revendication 1, dans lequel le convertisseur de tension CA-CC (20) est configuré pour convertir l'énergie CA en énergie CC à une haute tension CC de 400 V CC à 800 V CC sur le bus de distribution d'énergie CC (24).

3. Système de conditionnement de transport (100) selon la revendication 1 ou 2, dans lequel le générateur électrique CA (16) est un générateur synchrone conçu pour produire une tension triphasée à recevoir par le convertisseur de tension CA-CC (20), la tension de sortie triphasée étant comprise entre 280 V CA et 550 V CA.

4. Système de conditionnement de transport (100) selon une ou plusieurs des revendications précédentes, dans lequel le convertisseur de tension CA-CC (20) est un convertisseur à pont complet.

5. Système de conditionnement de transport (100) selon une ou plusieurs des revendications précédentes, dans lequel chacune de la pluralité de charges électriques est alimentée par le bus de distribution d'énergie CC (24), le moteur du compresseur (12') et le premier moteur de ventilateur électrique (15) étant couplés électriquement au bus de distribution d'énergie (24).

6. Système de conditionnement de transport (100) selon une ou plusieurs des revendications précédentes, dans lequel l'ensemble de distribution d'énergie électrique (30) comprend un premier dispositif de conversion de tension de charge (32, 33) couplé électriquement comme entrée au bus de distribution d'énergie CC (24) et fournissant une tension à une charge électrique de la pluralité de charges électriques (12', 15, 15', 14), ladite charge électrique étant couplée électriquement au bus de distribution d'énergie CC (24) par l'intermédiaire du premier dispositif de conversion de tension de charge (32, 33).

7. Système de conditionnement de transport (100) selon la revendication 6, dans lequel le premier dispositif de conversion de tension de charge est un onduleur CC-CA (33) couplé électriquement en entrée au bus de distribution d'énergie CC (24) et en sortie au moteur du compresseur (12') et configuré pour convertir la tension CC reçue du bus de distribution d'énergie CC (24) en une tension CA à fournir au moteur du compresseur (12').

8. Système de conditionnement de transport (100) selon la revendication 6 ou 7, lorsqu'il dépend de la revendication 5, dans lequel l'ensemble de distribution d'énergie électrique (30) comprend un second dispositif de conversion de tension de charge (32), le second dispositif de conversion de tension de charge étant un convertisseur de tension CC-CC (32) couplé électriquement en entrée au bus de distribution d'énergie CC (24) et en sortie au premier moteur de ventilateur (15), le convertisseur de tension CC-CC (32) configuré pour convertir la tension CC reçue du bus de distribution d'énergie CC (24) en une tension CC différente à fournir au premier moteur de ventilateur (15).

9. Système de conditionnement de transport (100) selon une ou plusieurs des revendications précédentes, dans lequel la pluralité de charges électriques comprend un second moteur de ventilateur électrique (15') pour entraîner le ventilateur de l'évaporateur (11), le second moteur de ventilateur électrique étant alimenté par le bus de distribution d'énergie CC (24).

10. Système de conditionnement de transport (100) selon une ou plusieurs des revendications précédentes, dans lequel un dispositif de conversion de la tension de charge est couplé électriquement en entrée au bus de distribution d'énergie (24) et en sortie au second moteur de ventilateur électrique (15'), pour convertir la tension CC reçue du bus de distribution d'énergie CC (24) en une tension CC différente à fournir au second moteur de ventilateur électrique (15').

11. Système de conditionnement de transport selon une ou plusieurs des revendications précédentes, dans lequel le générateur électrique CA (16) comprend des bornes de sortie CA et le convertisseur de tension CA-CC (20) comprend des premières bornes d'entrée connectées électriquement aux bornes de sortie CA et des secondes bornes d'entrée connectables à un réseau électrique public (34) fournissant une tension CA.

12. Système de conditionnement de transport selon la revendication 1, dans lequel le convertisseur de tension CC-CC (21) est conçu pour convertir la sortie de tension CC du module de puissance photovoltaïque (49) en une tension CC élevée dans la plage de valeurs fournies par le convertisseur de tension CA-CC (20).

13. Système de conditionnement de transport selon la revendication 1, dans lequel,

lorsque la pluralité de charges (12', 15, 15', 14) est alimentée par le bloc-batterie (44), le convertisseur de tension CC-CC (21) est configuré pour transformer une faible tension CC de sortie du bloc-batterie (44) en une tension CC élevée, et

lorsque le bloc-batterie (44) est chargé par le générateur CA (16) ou par un réseau électrique public (34), à travers le bus de distribution d'énergie CC (24), le convertisseur de tension CC-CC (21) est configuré pour transformer la haute tension CC en basse tension CC de sortie.

EP 4 039 514 B1

Fig. 1

Fig. 2

Fig. 3

EP 4 039 514 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140026599 A
- US 20160311294 A
- EP 1046543 A2
- WO 2018009798 A1
- WO 2018136738 A2
- US 20150246593 A1
- WO 2017176682 A1
- EP 1046543 A